# EUROPEAN PATENT SPECIFICATION

(11) **EP 2 556 634 B1**
(45) Date of publication and mention of the grant of the patent: **04.12.2019**
(21) Application number: 11722851.0
(22) Date of filing: 05.04.2011
(51) Int. Cl.: H04L 12/58

(54) **PERSONALISED VIDEO GENERATING AND DELIVERY**
PERSONALISIERTE VIDEOERZEUGUNG UND -BEREITSTELLUNG
GÉNÉRATION ET REMISE D'UNE VIDÉO PERSONNALISÉE

(30) Priority: 22.10.2010 GB 201017865; 06.04.2010 GB 201005702
(43) Date of publication of application: 13.02.2013
(73) Proprietor: Mellamphy, Simon, Leigh-on-Sea Essex SS9 1PU (GB); Turner, Terry, Westcliff-on-Sea Essex SS0 0TF (GB); Askew, Victor, Shoeburyness Essex SS3 9YG (GB)
(72) Inventor: Mellamphy, Simon, Leigh-on-Sea Essex SS9 1PU (GB); Turner, Terry, Westcliff-on-Sea Essex SS0 0TF (GB); Askew, Victor, Shoeburyness Essex SS3 9YG (GB)
(74) Representative: Fry, David John
(86) International application number: PCT/GB2011/000525
(87) International publication number: WO 2011/124880

(56) References cited:
- WO-A2-2009/004636
- CA-A1- 2 290 195
- US-A1- 2006 136 556

## Description

### Field of the Invention

The present invention relates to a method and system for generating and delivering personalised video content.

### Background of the Invention

Digital communications systems, particularly the Internet, have in recent times enabled users to send video and audio messages to other people using email and/or mobile telephone networks. For example, a user can send a prerecorded video clip of a media personality to a friend, relative or colleague in which the personality delivers a message such as 'happy birthday', 'good luck' and so on. The clip is either sent as a link in an email to the recipient's address, or as a link or HTTP request in a SMS message to the recipient's mobile telephone. Such messages are, however, not personalised to the recipient.

In the corporate arena, it is also known for managers to send broadcast-type messages to all, or a sub-set of, employees. This may be for information purposes or to offer some form of congratulations, gratitude or motivational message. Typically, the message is sent by email with, at best, the employee's forename merged into the start of the email to give some degree of personalisation.

The use of weblogs or 'blogs' is also very popular, although there is little or no personalisation used with this type of content at the present time.

CA 2 290 195 discloses a computer-based system and method for generating customised audio and/or video communications, such as personalised greetings. WO2009/004636 discloses a method and system for rendering messages, including multimedia messages.

### Summary of the Invention

According to a first aspect of the invention, there is provided a personalised video message system having the features of claim 1 of the appended set of claims.

In this way it is possible to generate a personalised video message in which (i) the name of the intended recipient, be it an individual, a subset of individuals from an identifiable group, or the name of an organisation, and (ii) a message is provided in a single video file comprising the concatenated personalised and general message parts. Concatenated in this sense means placing one piece of video content after the other, i.e. in series.

For the purposes of this application, it is assumed that the video may incorporate an audio or speech track.

The video content in the first and second databases may comprise prerecorded video from a particular personality. For example, a user can select a sports personality to deliver a video message comprising the personality saying the recipient's forename to camera followed by them delivering a message such as 'happy birthday' or 'good luck' to camera.

In the corporate arena, the personalised and general message parts may be recorded in advance by a manager or senior member of the corporation for subsequent delivery to individual employees, or subsets of employees.

The system and method is also applicable to blogs, particularly video blogs. In this case, the general message part comprises the blog. This provides an efficient way of adding personalisation currently not available in video blogging.

The system and method has many potential applications. Businesses may select video content delivered by well-known business leaders, politicians or inspirational personalities. The system and method also has application in the charity sector, e.g. whereby well-known celebrities can issue personalised charity appeals.

The delivery system may be arranged to send the link to the intended recipient using a communications network in an email, SMS or WAP push message, activation of the link enabling said recipient to receive over the communications network a streamed version of the concatenated video content from the message system.

The single video file is not generated until the intended recipient actually activates the link at their end, e.g. at their computer terminal or mobile communications device. This avoids the need for the video processing means to store potentially many different sets of joined video clips before the intended recipients actually activate their links. Less memory is therefore needed at the video messaging system.

It will be appreciated that there are many different types of potential recipient receiving device, including computers and portable communications devices, including mobile telephones, smartphones and PDAs, each of which may use a different respective operating system and browser having different video decoding and playback capabilities. By detecting the video playing capabilities of the recipient's device at the time the link is activated, then at that time the video can be generated and converted into a format suitable for the device.

The video playing capabilities of the recipient's device can be determined by means of a the system being arranged to receive in response to activation of the link header information identifying the recipient device and a browser of the device and to interrogate a database indicating a format appropriate for said device and browse.

The system may further comprise a time specification system arranged to prompt the user to enter a time and/or date when the message should be delivered to the recipient.

The time specification system may further be arranged to identify the user's local time zone and, in the event that said local time zone differs from that of the link delivery system's local time zone, to calculate the appropriate different delivery time and/or date to send the link relative to the local time zone.

The video processing system may arranged automatically to join the video content in the second file to the end of the video content in the first video file to produce the concatenated video content.

In the case where the link delivery system is arranged to identify that a link should be sent in accordance with a particular time specification, the video processing means can be arranged automatically to generate the concatenated video content for storage and linking in the message subsequently delivered to the intended recipient.

Alternatively, the video processing means may be arranged automatically to generate the concatenated video content only after the link is remotely activated whereafter the video processing means is arranged automatically to generate the concatenated video for transmission to the recipient device.

In accordance with a second aspect, there is provided a method of generating a personalised video message having the features of claim 10.

Selection may be received from a user over a data or communications network, e.g. the Internet, the method further comprising prompting a user to select the first, personalised video file from a list of available names or entities, select the second, message video file from a list of available messages or greetings, and to input an email address or telephone number associated with an intended recipient or group of recipients. The method may further comprise delivering a link to the intended recipient in an email, SMS or WAP push message, activation of the link enabling said recipient to receive a streamed version of the concatenated video content.

The method may further comprise prompting the user to enter the time and/or date when the message is to be delivered to the recipient and delivering the link in accordance with the specification.

The name and message files may be identified by metadata prior to the specified time and/or date, the video files corresponding to the metadata being processed to generate the concatenated file subsequent to the specified time and/or date. The aim here is to use memory efficiently and this avoids storing concatenated video files for long periods before they are intended to be viewed by the recipient.

The method may further comprise identifying the user's local time zone and, in the event that said local time zone differs from that of the link delivery system, calculating the appropriate delivery time and/or date to send the link relative to the local time zone. Identifying the user's local time zone is preferably performed by prompting the user to enter a location and converting the location to a time zone. Alternatively, identifying the user's local time zone can be performed automatically using GPS or the network address of the user's computer terminal.

The video content in the first and second databases preferably comprises pre-recorded video and speech from a particular personality. The personality may be selected by the user from a plurality of available personalities. The plurality of available personalities can be grouped in the databases by sector, e.g. sports, music, film, business leaders, political leaders, inspirational personalities.

The video processing preferably comprises automatically joining the video content in the second file to the end of the video content in the first video file to produce concatenated video content which is stored as a single file.

When the delivery system identifies that a link should be sent in accordance with a particular time specification, video processing preferably occurs automatically in accordance with said time-based identification to generate the concatenated video content for storage and linking in a message subsequently delivered to the intended recipient.

The joining of video content may include placing a transition effect between the video content from the first and second video files, e.g. a fade or dissolve effect. This is preferably performed automatically.

### Brief Description of Drawings

The invention will now be described, by way of example, with reference to the accompanying drawings, in which:
Figure 1 is a block diagram showing a typical communications network over which messages generated in accordance with a preferred embodiment can be transmitted;
Figure 2 is block diagram of a personalised messaging system, arranged to operate in accordance with the invention;
Figure 3 is a flow diagram indicating the various steps performed between a user computer and the personalised messaging system to generate a personalised message in preparation for sending to a recipient;
Figure 4 shows a first pull-down menu displayed at the user computer;
Figure 5 shows a second pull-down menu displayed at the user computer;
Figure 6 shows an input text control displayed at the user computer;
Figure 7 shows a third pull-down menu displayed at the user computer;
Figure 8 is a schematic diagram indicating how video processing of individual video files is performed to generate concatenated video content;
Figure 9 shows a fourth pull-down menu displayed at the user computer'
Figure 10 shows a data entry system for specifying the email address or mobile telephone number of an intended recipient;
Figure 11 is a flow diagram indicating the steps involved in generating a delivery time specification at the messaging system end;
Figure 12 is a flow diagram indicating the steps involved in a send control process at the messaging system end; and
Figure 13 is a flow diagram indicating the steps involved in a video delivery process for converting video clips to a format appropriate to a particular receiving device at the time the delivered message is opened or activated by a user.

### Detailed Description of a Preferred Embodiment

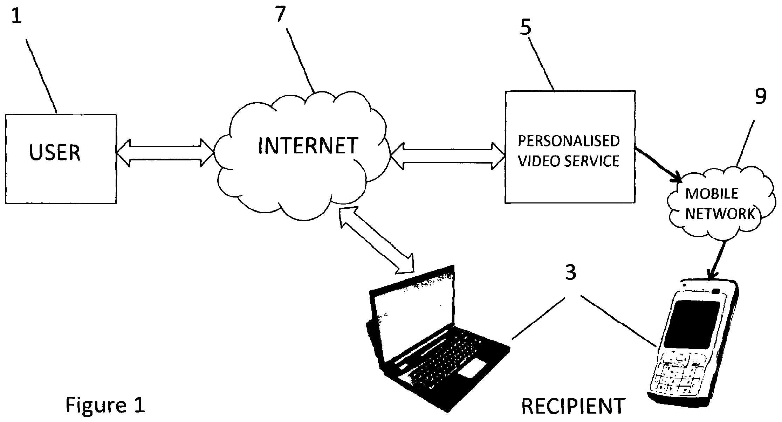

Referring to Figure 1, there is shown a network arrangement in which a user operating a user terminal 1 can generate a personalised video message for subsequent delivery to a recipient communications terminal such as a computer, PDA or mobile telephone 3. The personalised message is generated by the user 1 accessing a personalised video service (PVS) 5 via the Internet. The PVS 5 uses information provided by the user 1 via its website portal to generate, store and send the video message to the recipient terminal 3.

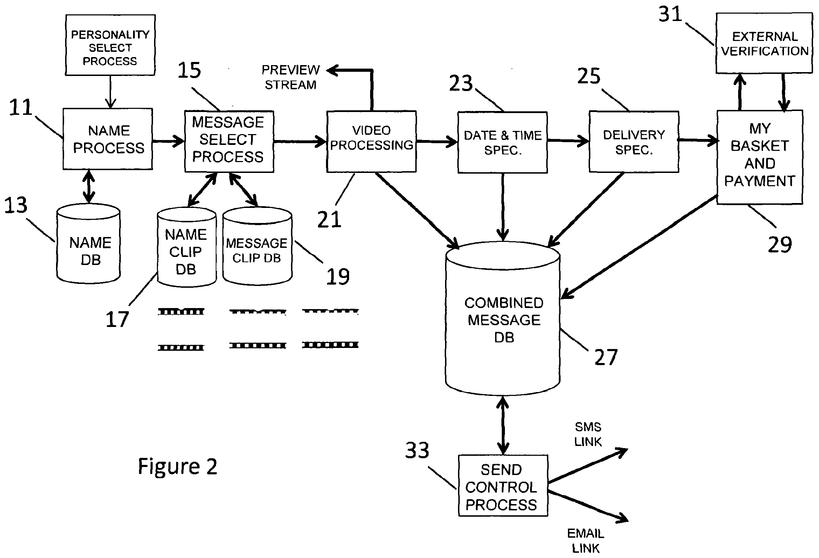

Referring to Figure 2, the PVS 5 comprises a number of system modules that prompt the user, via the website portal, to enter selections in a particular order.

Initially, the user is prompted to select a personality who will appear in the video content. This may be, for example, a media celebrity, sports person, business leader or politician. Next, a name process 11 prompts the user to select one of a number of stored names from a name database 13. The database 13 stores a limited number of names corresponding to the more common forenames in current usage. The names are stored in alphabetical order and are selected by means of the user initially specifying the first initial of the name, following which an expanded list of names beginning with the specified letter are shown for selection.

The next process is a message select process 15. Based on the name selected in the name process 11, a video file (MPEG) is retrieved from a name clip database 17 that, as part of its content, includes a pre-recorded greeting to the selected name delivered by the selected personality.

A further part of the message select process 15 prompts the user to select the second part of the message, namely the generalised message content from a predefined list. These may be categorised as, for example, "birthday greetings", "congratulations", "good luck", "motivational", "charity appeals", "blogs" and so on. Selecting a particular category will expand a more specific set of selectable messages such as "18^{th} birthday", "21^{st} birthday" and so on. Selection of a particular message causes a video file (MPEG) to be retrieved from a message clip database 19 that, as part of its content, includes the appropriate pre-recorded message from the selected personality.

Next, a video processing system 21 generates a preview of the personalised message. This comprises joining or splicing the selected message clip to the end of the selected name clip, the result being a concatenated MPEG video clip which is generated and stored as a single file. The concatenated MPEG clip is converted to the FLV format and can be streamed back to the user over the Internet 7. This video processing is performed automatically without user intervention.

Assuming the user is satisfied with the concatenated clip, the next part 23 of the system 5 prompts the user to enter a date and/or time specification (DTS). The DTS 23 enables the user to specify on which date and at what approximate time the message is notified to the recipient 3. This is likely to be important where the message relates to a birthday or similar date-related event. Further details will be specified below.

Next, the user is prompted to enter a delivery specification 25, particularly to indicate how the message is to be notified to the recipient. This may be by means of sending an activatable link to the concatenated file in an email message or by means of sending the link in a SMS or WAP Push message to the recipient's mobile telephone number. The output from the video processing, DTS and delivery specification processes 21, 23, 25 are stored together as a 'job' in a combined message database 27 for later use by a send control process 33, to be described below.

When the user is satisfied with their selections, they proceed to the 'My Basket' page 29 of the web portal, which is a standard e-commerce process. The user can specify further messages at this time or can simply proceed to 'checkout' by giving their payment details. The payment details are checked by an external verification service 31 which will return either an 'accept' or 'deny' response. If payment is accepted, the job stored in the combined message database 27 is committed for sending and the user is informed accordingly.

As indicated above, there is also provided a send control process 33; this process is responsible for handling the sending and timing of the email or mobile telephone message notifying the recipient that a message is waiting for them to view, together with the activatable link.

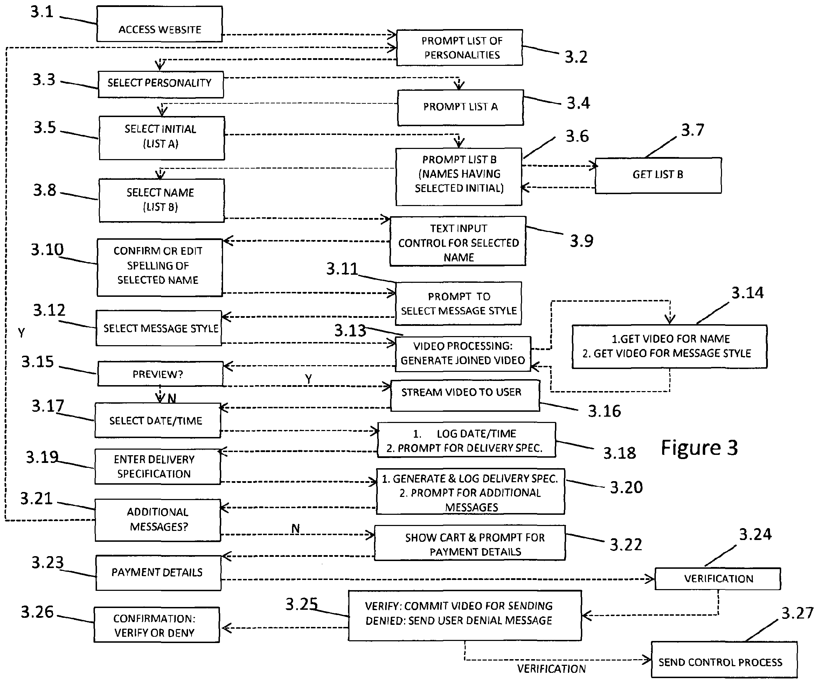

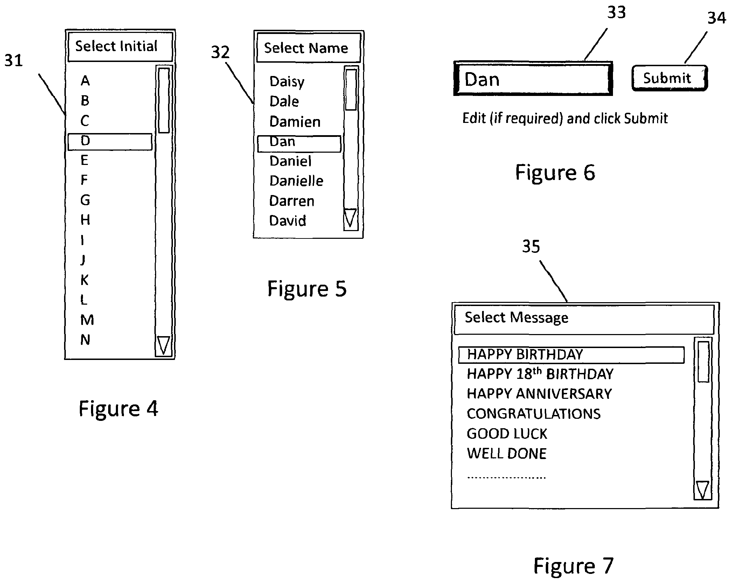

Referring to Figure 3, in conjunction with Figures 4 to 10, there will now be described the main communication steps that occur between the user's computer 1 and the PVS 5 in the process of generating a personalised video message.

In a first step 3.1 the user accesses the PVS web portal. Upon selecting the option to generate a new video message, in step 3.2 the user is prompted to select a particular personality who will deliver the message in the video content; selection may be made via a hierarchical menu of personality types (sports; music; film; business, and so on.) The user makes their selection in step 3.3. In step 3.4 the PVS 5 prompts the user to select from a menu referred to herein as List A. As shown in Figure 4, List A 31 comprises a drop down menu from which the user can select the first initial of the recipient's forename, e.g. D. Selection is made in step 3.5 at the user's end. In step 3.6, the PVS 5 prompts the user to select a specific forename from a further menu (retrieved in step 3.7) referred to as List B. As shown in Figure 5, List B 32 comprises a drop down menu from which the user can select a name beginning with the selected initial, e.g. Dan. The user selects the required name in step 3.8.

In response to selection of the forename the PVS 5 displays a text input control box 33 in step 3.9 which allows the user to modify the spelling of the selected name, for example to change Claire to Clare (step 3.10). This edited name will appear in the email or SMS message generated by the send control process 3.29, but will not affect the video content itself. Figure 6 shows a text control box 33 with submit button 34.

Next, the user is prompted to select the main message from a menu of message types or styles (step 3.11). The user is presented with a menu 35 of different messages, such as 'happy birthday' and so on, for which see Figure 7. Selection of the main message by the user takes place in step 3.12. causes the PVS 5 to retrieve the name clip from the name clip database 17 and the message clip from the message clip database 19, both clips corresponding to content delivered by the selected personality.

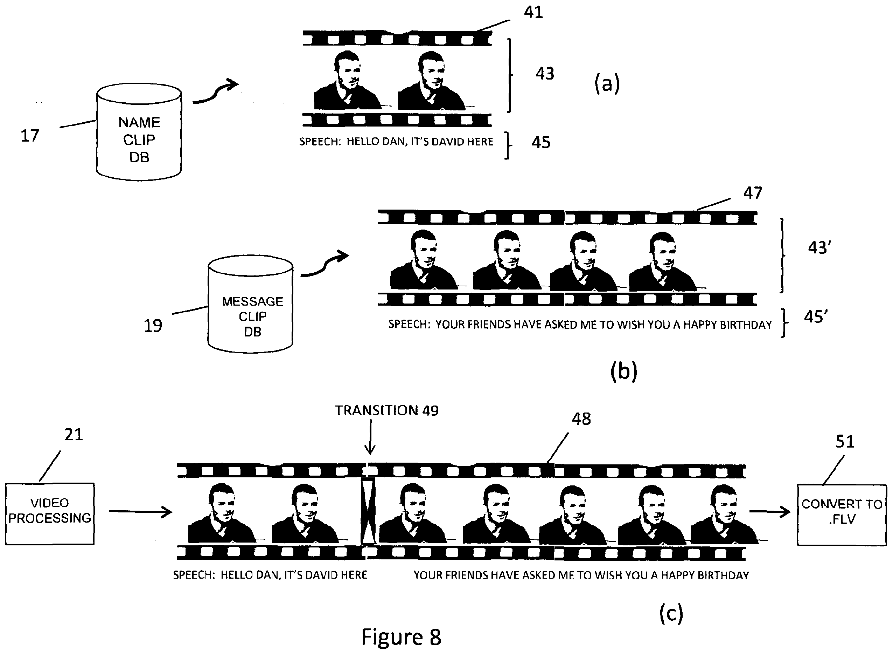

In the next step, 3.13, the video process 21 performs the task of joining (or splicing) the two selected clips together to form the concatenated video clip. This involves retrieving the personalised 'name' video clip and selected message clip as delivered to camera by the selected personality (step 3.14). Referring to Figures 6 to 8, in an exemplary case we assume that the user has selected David Beckham to deliver the message, the forename 'Dan' from List B 32 and a birthday greeting message from menu 35. As shown in Figure 8(a), this results in a name clip 41 being retrieved from the name clip database 17 having as its content David Beckham saying "Hello Dan, it's David here" to camera. As shown in Figure 8(b), a message clip 47 is retrieved from the message clip database 19 having as its content David Beckham saying "Your friends have asked me to wish you a happy birthday" to camera. Figure 8(c) shows the result of processing the clips 41, 47 in step 3.13 which involves joining the start of the message clip 47 to the end of the name clip 41.

Preferably, a transition effect 49 is automatically placed between the two joined clips 41, 47 to make the join, when viewed, appear as seamless as possible with no obvious jumping or jitter. The transition effect 49 may be a fade or dissolve effect, for example.

As will be appreciated, each of the name and message clips 41, 47 comprises video data 43 and audio data 45. References herein to video files or clips are assumed to incorporate audio data in the form of speech.

The above video processing step 3.13 is performed automatically without human intervention. This automatic processing may also involve processing the resulting concatenated video file 48 to correct any format errors or differences. This involves generating from the joined MPEG clips a file suitable for streaming, such as a .FLV file, using a MPEG-FLV codec 51.

In step 3.14, the user is given the option of previewing the concatenated FLV file 48. Selection causes the PVS 5 to stream the FLV file 48 to the user's terminal (step 3.16) where it can be previewed in a suitable viewer such as Windows Media Player or Quicktime.

The next step 3.17 requires the user to enter a date and time specification, corresponding to the data and preferred time when the concatenated message should be notified to the intended recipient 3. The term 'preferred' is used in regard to the notification time as it is not considered so important for the send control process to send the email or SMS at the exact specified time. Rather, the email or SMS is sent shortly after the specified time.

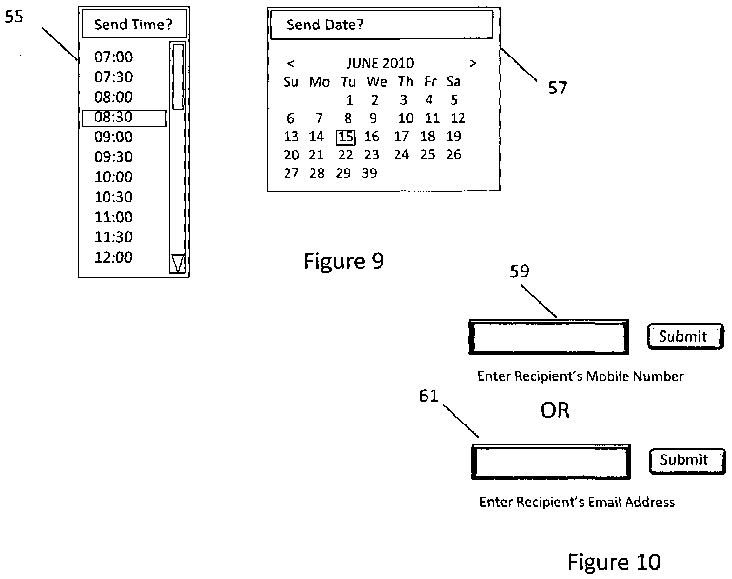

As indicated in Figure 9, step 3.17 is a relatively straightforward procedure involving selecting the time from a first drop-down menu 55 and the date from a further calendar menu 57. If the date and time occurs in the past, an error message is displayed. Upon receiving the date and time specification, the PVS 5 logs this information against a current job number for the message in the combined message database 27 and performs a date normalisation process (step 3.18).

Data normalisation is required in case the situation arises where the time zone of the user differs from the local time zone of the PVS 5, which is assumed to be at Greenwich Mean Time (GMT) in this case. If the user enters the time 0900 and is located in the time zone GMT- 5 hours, then, without normalisation, the notification message may be sent to the recipient at 0400 if they are in the same time zone as the user.

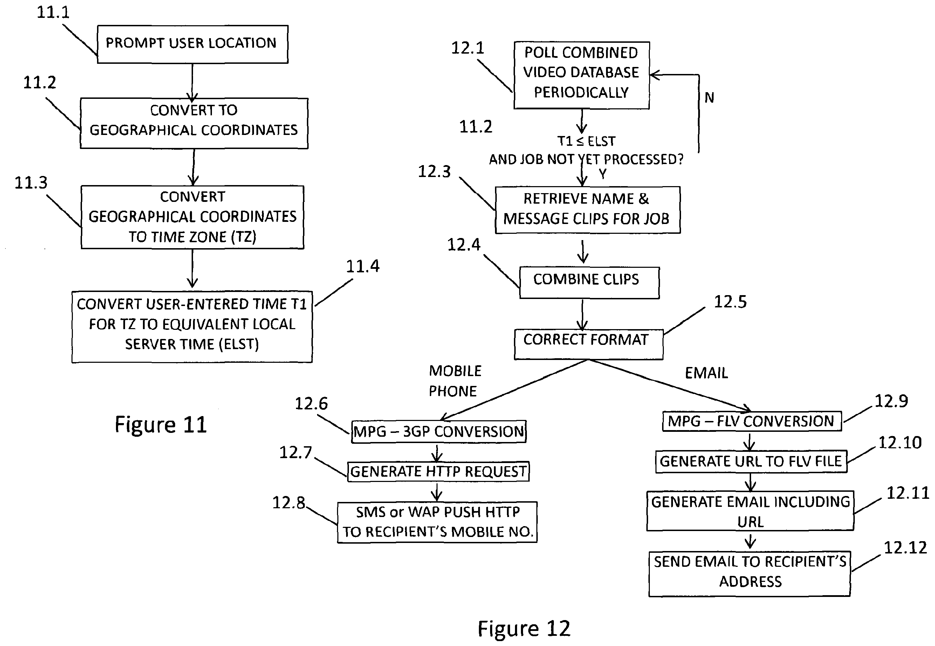

Referring to Figure 11, normalisation initially involves prompting the user to indicate their location (step 11.1) by entering their town, country or postal or ZIP code. From this, the location is converted to geographical coordinates (step 11.2) using the Google Maps Application Programming Interface (API). Next (step 11.3), the co-ordinates are converted into a time zone via a request to the GeoNames.org service. In step 11.4, the time zone is used to calculate the equivalent local server time (ELST) corresponding to the time actually specified by the user. So, for the above example, 0900 becomes 1400, which is the time stored against the relevant job number in the combined message database 27.

In step 3.19, the user enters their delivery specification, essentially requiring them to specify either an email notification or mobile phone notification. Referring to Figure 10, this is achieved by simply entering the recipient's email or mobile telephone details into the appropriate text box.

In step 3.20, the delivery specification is logged against the relevant job number in the combined message database 27. The user is also prompted with the option of entering further messages. In step 3.21, if the user chooses to do so, the current job number remains stored against the user's ID and they return to step 3.2. If no further messages are required, the PVS 5 presents to the user their 'shopping cart' and requests payment details in step 3.22. Payment details are entered in step 3.23 and subsequently sent to an external verification service in step 3.24. The result of the verification is notified to the user in step 3.25 and displayed in step 3.26. A positive verification in step 3.24 causes the PVS 5 to commit the relevant job number (or numbers in the case of multiple messages) in the database 27. The final step 3.27 is the send control process which is described below.

The send control process (SCP) is a separate time-initiated process that is responsible for notifying recipients that someone has sent them a video message. It may be regarded as a background process, operating independently from the message generating process, which polls (step 12.1) the database 27 at periodic intervals to identify those committed jobs whose date and time specification (normalised, if necessary) is earlier than the current time (step 12.2). This of course assumes the relevant message for that job has not yet been sent.

For each job identified in step 12.2, the selection information (name clip; message clip) and delivery specification are retrieved from the database 27.

For each job, video processing is performed as in step 3.13 described above, namely retrieving the selected name clip and message clip in MPEG format, splicing them together by concatenating the files (step 12.4), processing the resultant file to correct its format (step 12.5), and then further processing it according to the delivery specification. If mobile telephone delivery is specified, the concatenated MPEG file is converted to 3GP format (step 12.6), a HTTP request generated (step 12.7) and the resulting link sent in a SMS or WAP Push HTTP to the recipient's telephone number (step 12.8). Each step is performed automatically. If email delivery is specified, the concatenated MPEG file is converted to .FLV format (step 12.9), a URL to the .FLV file generated (step 12.10) and an email generated which includes the URL (step 12.11). Finally, the email is sent to the recipient's email address in step 12.12. Again, each step is performed automatically.

It will be appreciated from the foregoing that the method steps performed by the PVS 5 are implemented in software, or a suite of software systems running on suitable hardware computer systems. In this case, the PVS 5 was developed using the PHP programming language and the Zend Framework library which provides a Model-View-Controller (MVC) structure. Consequently, many of the constituent files fall into the categories of 'controllers' or 'views'. An initial selection of three files demonstrate key elements of the process. These files are:
- PersonalController.php - the server logic behind the 'personal' message page;
- index.phtml - the 'personal' message page view including the client-side logic; and
- SenderController.php - the server logic involved in the actual sending of the SMS messages.

The above embodiment assumes that the files created in step 12.6 will always be suited for playback at the recipient's device 3. Where the receiving device 3 is a computer, this will usually be the case since most computers will have media playing software capable of playing the most common codecs. However, in the case of mobile telephones and PDAs, it will be appreciated that the recipient's device (and the software running on it) is not known to the PVS 5 when the job is initially set up; all that is known is the recipient's mobile telephone number. Different mobile telephones and PDAs have different capabilities and can use a number of different browsers which may be unsuited to decoding a particular codec, or may show it in a non-optimal format.

A refinement of the above embodiment therefore provides a video delivery process (VDP) for converting video clips to a format appropriate to a particular receiving device at the time the delivered message is opened or activated by the recipient.

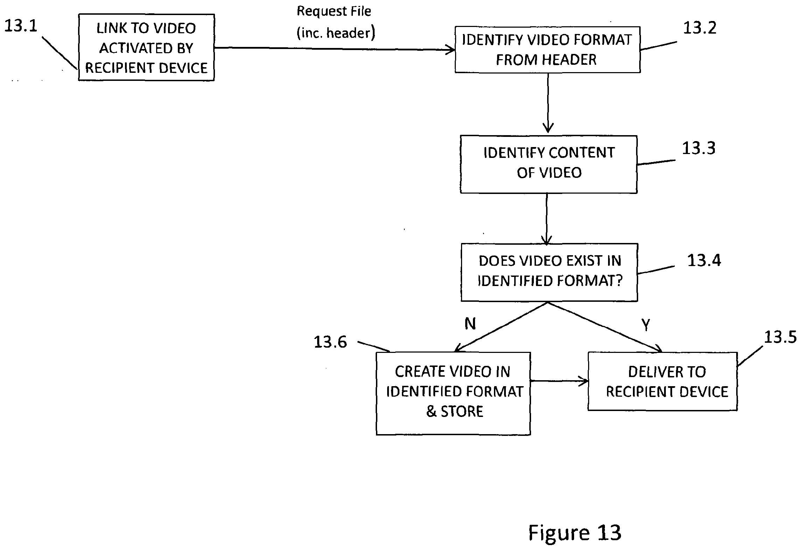

In the refined system, described here with reference to Figure 13, a so-called Receiving Device Identifier Program (RDIP) is provided as part of the PVS 5; the role of the RDIP is to use the known Wireless Universal Resource File (WURFL) to identify the requesting device, and more particularly its video playing capabilities, at the time the link to the video is activated by the recipient at their device. Details of the WURFL can be found at http://wurfl.sourceforge.net/. Having identified the requesting device and its capabilities, an appropriate format, in this case a 3GP format, is identified and a check is performed to see if there is already stored at the PVS 5 the video combination in the identified 3GP format. If so, it can be delivered; if not, it is generated at the PVS and then delivered.

Although 3GP is used in this example, other formats can be used if this is the requirement of the requesting mobile device. Examples include 3GP (for general phones), MP4/H264 (for iPhones/Android), AVI (to view on Blackberrys), and FLV (For PC's).

Referring to Figure 13, in a first step 13.1, the recipient activates their link to the video, and a connection is established. The recipient's request contains 'header' information which identifies the device agent (indicating the device and browser). In step 13.2, the request is passed to a 'controller' which uses a MediaFormat class to identify the appropriate delivery format for the device agent. This is a 3-stage process:
a. a device database is interrogated to build the fall back tree of devices (the concept of WURFL fall back trees is discussed below);
b. a media format database table is interrogated to find the active formats that match the fall back tree of devices; and
c. the active format that relates to the most specialised device in the fallback tree is selected.

In step 13.3, the recipient's request is used to identify the contents of the personalised video, e.g. according to the specification stored in the combined message database 27. In step 13.4, a check is performed to identify whether a video with the required content in the selected active format exists. If it does, then in step 13.5 it can be delivered to the device. If it does not exist then in step 13.6, it is created and delivered. It can also be stored for later use, e.g. in case a further request is received for the particular message combination in the particular format.

It will be appreciated that identifying the requesting device and creating the video are two separate processes. Generally, the requesting device, and therefore the format to be delivered, can only be identified at the time of the request. The latest point at which the video can be created is after identification and immediately before delivery. This is the default; there is nothing to prevent a video of specific content and format being created at any time before a request is received, however. The challenge is to balance the cost of the resources required to pre-create and store all possible combinations of content and format that could be requested against the delay incurred when a non-existent video has to be created at the time of the request.

In terms of whether a video file can be created before a request is received based on the telephone number specified by the 'giver' of the message, it will be appreciated that a telephone number does not define the capabilities of the device used to request a video. In fact, a smart phone could have a choice of software and the requestor could repeat the same request using a different browser (requiring a different video format) for each request.

In practice, one could envisage a few situations where pre-creation would be practicable. Firstly, a corporate campaign for staff where the requesting devices are known, e.g. all staff use Blackberry phones. Also, a corporate campaign for external customers where the device agent of each customer's mobile has already been identified and stored in a customer/recipient database (assuming each had to register using their phone at some point in the past). This might still require a 'dynamic create' where customers change their phone but keep their number and do not 're-register' but after a single request the new device agent could be stored for future reference.

There will now be described in greater detail the above identification and video generating steps of the RDIP with specific reference to WURFL and fall back trees.

To recap, the objectives of the VDP and RDIP may be summarised:
1. to use the WURFL to identify requesting devices.
2. to automatically select the appropriate video format for the requesting device.
3. to store the parameters required to create the chosen format in a database.
4. to define a structure for data (videos, logs, etc.) folders.

### Identifying the Requesting Device

A **WURFL** PHP library (see the above link) is bundled as part of the RDIP library structure. The WURFL library includes amongst other things:
- a version of the WURFL XML file used to create a MySQL database (see TeraWurflConfig.php for database configuration settings);
- PHP classes to interrogate the database;
- an 'admin' folder that, if made visible to a web server, exposes various utilities.

It is important to appreciate the WURFL concept of the 'fall back tree' of devices. This is a hierarchical tree with the most generic set of capabilities at the root which becomes more specific as one moves up the tree. Each set of capabilities has an identifying 'device' string. For example, the fall back tree for a Blackberry 8800 is:
blackberry8800_ver1
blackberry_generic_ver4_sub20
blackberry_generic_ver4_sub10
blackberry_generic_ver4
blackberry_generic_ver3_sub70
blackberry_generic_ver3_sub60
blackberry_generic_ver3_sub50
blackberry_generic_ver3_sub30
blackberry_generic_ver2
blackberry_generic
generic_xhtml
generic

Ideally, the means to generate 3GP files for all mobile phones and PDAs is provided plus it is useful to hold a format to be provided to non-mobile client devices. To achieve this, 2 pseudo devices, 'generic_mobile' and 'generic_streaming_mobile' are included. For mobile devices, the former is injected into the fall back tree above 'generic_xhtml' and the latter is injected above that if the device supports streaming video.

The **MediaFormat.php** model class provides an interface to the both the WURFL database and the a **media_format** table. The significant members of the **media_format** table are:

| | |
|---|---|
| application | The application used to convert videos; for now always 'ffmpeg'. |
| wurfl_device | A WURFL device string; additional values added ('generic_mobile' and 'generic_streaming_mobile') as keys for fallback formats. |
| extension | The file extension to be used for files of this format, e.g. '3gp' or one of the aforementioned alternatives. |
| revision | An integer to distinguish between older and newer versions of parameters. |
| active | Identifies the active format for the application/wurfl_device. There should only be a row for each application/device with the active one set to 'Y'; all others should be set to 'N'. |
| params | The parameters to be passed to the video creation application; an array stored as a JSON-encoded string. |
| comments | Optional; a free-format string. |

The most important method that MediaFormat provides is called getFormatForClient(). This method:
- instantiates CM_Wurfl (which is simply a wrapper for the Tera_WURFL class);
- calls CM_Wurfl to determine the device that best matches the request user agent;
- CM_Wurfl is queried for the 'fall back tree' of devices, whether streaming video is supported and if the requestor is a mobile device;
- if necessary, the fall back tree is extended by adding CM Online's own generic device strings;
- the media_format table is queried to find all the active formats that match devices in the fall back tree; and
- the format selected for the device that is furthest from the root, i.e. the most specialised.

At this point, we know the extension of the video file we require to service the device and the parameters needed to create that file if it does not already exist.

### Creating the Video File

A class called CM_Resource_Video is responsible for creating and retrieving video files. The class focuses on the name and message requirements of the PVS 5 providing 2 main functions:
create($name, $message, $mediaFormat, $watermark = false)
createMessage($message, $mediaFormat, $watermark = false)

In both cases, the class adopts the following approach:
1. construct the necessary path, filename and extension and check if the file exists;
2. if it does then return 'success';
3. if it doesn't, check if the source video files exist;
4. if they do then convert them to the required format using the parameters returned by the MediaFormat class and return.

For create(), if the concatenated source video does not exist, the source name and message files are spliced together to create a personalised video in 'base' format then this file is converted to the required 'delivery' format. Currently, the 'base' video format is 'mpg' as this allows for concatenation of the component videos.

The paths and some filenames related to video management are retrieved from the app.ini configuration file.

Assuming the CM_Resource_Video class returns 'success', the calling class can then proceed knowing the video file exists in the required delivery format.

### Locations of Video Files

As already stated, the paths and some filenames (e.g. watermark images) are retrieved from the app.ini file.

Typically, the video process folders are grouped together. The configuration file allows for the following separate folders:

| | |
|---|---|
| names | source ('base' format) name clips, e.g. kara_adam.mpg; |
| messages | source ('base' format) message clips, e.g. kara_email_for_you.mpg. Also, message clips in preview formats, e.g. kara_email_for_you.flv; |
| personal | spliced videos (in 'base' format), e.g. kara_adam_kara_email_for_you.mpg, and in 'delivery' formats, e.g. kara_adam_kara_email_for_you.3gp; |
| trailers | source ('base' format) clips to be spliced at the end of messages; |
| watermarks | images ('gif or 'png') used to overlay on videos. |

### Maintenance Aspects of the Process

### Review the media format devices and parameters

It is likely with the development of video processing software that media formats will be able to be optimised or formats for a different video processor could be created.

### Keeping the WURFL up to date

The WURFL is a dynamic database that is constantly maintained by volunteers as information is corrected and new models introduced. It is currently a manual process to update the local copy.

The WURFL library included in the CM library tree includes some utilities to manage the WURFL and these could be exposed within the 'admin' area of the site. Alternatively, an automated process could be created.

Human intervention is required to identify if new MediaFormat instances are required to be generated.

### Administration pages to maintain the media format table

Administration pages exist to help test device recognition, create and update media format records and test media formats.

### The balance between disk resource and 'time-to-deliver'

As indicated above, all the unique combinations of a video (performer, name, message and format), once requested and created, are retained to provide the quickest response. The more combinations, the more disk space required.

In some situations this can mitigated quite simply: e.g. once a corporate campaign has ended, all videos for that particular message could be deleted or archived - automatically or manually.

Normally, the type of the requesting device is not known until the request for the video is received (although this may not be the case in some corporate scenarios). In an ideal world, all combinations of delivery format videos will be pre-created and able to be delivered 'on demand'.

In the event that this approach is constrained by some factor (disk space, processor resource or time to create) then it is desirable to identify the combinations that will be the most popular and focus resources on those. It is anticipated that 'most popular' could be defined by any combination of performer, name, message or format and that the prediction of popularity will be improved by the analysis of previous deliveries.

## Claims

1. A personalised video message system (5), the system comprising a first database (17) of personalised video files each of which refers in the video content to a respective name or entity; a second database (19) of video message files each of which contains in the video content a respective message or greeting; a selection system (15) enabling a user to select from a remote terminal a first video file from the first database, and a second video file from the second database; and video processing means (21) arranged to join the selected first and second video files to generate a single video file comprising the concatenated video content; **characterised in that** the selection system further comprises means to identify an intended recipient, and the system further comprises a delivery system (33) for sending a message to the identified recipient which message includes a means to access the concatenated video content in the form of a link, the video processing means being arranged to generate the single video file in one of a plurality of available video formats, the format being selected in accordance with the video playing capabilities of the recipient's device which is or are determined using information received from said recipient device in response to activation of the link, the single video file being generated in response to activation of the link at the recipient's device.

2. A system according to claim 1, wherein the delivery system is arranged to send the link to the intended recipient using a communications network in an email, SMS or WAP push message, activation of the link enabling said recipient to receive over the communications network a streamed version of the concatenated video content from the message system.

3. A system according to claim 1 or claim 2, wherein the video playing capabilities of the recipient's device is or are determined by means of a the system being arranged to receive in response to activation of the link header information identifying the recipient device and a browser of the device and to interrogate a database indicating a format appropriate for said device and browse.

4. A system according to any one of claims 1 to 3, further comprising a time specification system arranged to prompt the user to enter a time and/or date when the message should be delivered to the recipient.

5. A system according to claim 4, wherein the time specification system is further arranged to identify the user's local time zone and, in the event that said local time zone differs from that of the link delivery system's local time zone, to calculate the appropriate different delivery time and/or date to send the link relative to the local time zone.

6. A system according to any one of claims 1 to 5, wherein the video processing system automatically joins the video content in the second file to the end of the video content in the first video file to produce the concatenated video content.

7. A system according to claim 6, wherein the joining includes placing a transition effect between the video content from the first and second video files.

8. A system according to claim 4 and any claim dependent thereon, wherein when the link delivery system identifies that a link should be sent in accordance with a particular time specification, the video processing means is arranged automatically to generate the concatenated video content for storage and linking in the message subsequently delivered to the intended recipient.

9. A system according to claim 4 and any claim dependent thereon, wherein when the link delivery system identifies that a link should be sent in accordance with a particular time specification, the video processing means is arranged automatically to generate the concatenated video content only after the link is remotely activated whereafter the video processing means is arranged automatically to generate the concatenated video for transmission to the recipient device.

10. A method of generating a personalised video message, the method comprising prompting selection of a first, personalised video file from a first database of personalised files each of which refers in the video content to a respective name or entity (3.2), prompting selection of a second, message video file from a second database of files each of which contains in the video content a respective message or greeting (3.11), receiving identification of an intended recipient (3.18), **characterised in that** the method further comprises sending to the recipient a message (13.5) which message includes a link for accessing concatenated video content, and in response to activation of the link (13.1) by the recipient, receiving information enabling identification of the recipient device type (13.2), determining from the identification information the video playing capabilities of the recipient device, and processing the selected first and second video files to generate a single video file comprising the concatenated video content, said generated video file being generated using a codec appropriate to the video playing capabilities of the recipient's device type (13.6).

11. A method according to claim 10, further comprising delivering the link to a device associated with the intended recipient in an email, SMS or WAP push message over a data or communications network, activation of the link causing delivery of a streamed version of the concatenated video content to the recipient device.

12. A method according to claim 10 or claim 11, wherein the video playing capabilities of the recipient device type is or are determined by means of receiving in response to activation of the link header information identifying the recipient device type and a browser of the device and interrogating a database indicating a format appropriate for said device and browser.

13. A non-transitory computer-readable storage medium having stored thereon computer-readable code, which, when executed by computing apparatus, causes the computing apparatus to perform a method as claimed in any one of claims 10 to 12.

## Patentansprüche

1. Personalisiertes Videonachrichtensystem (5), wobei das System Folgendes umfasst: eine erste Datenbank (17) von personalisierten Videodateien, von denen sich jede in dem Videoinhalt auf einen jeweiligen Namen oder eine jeweilige natürliche oder juristische Person bezieht; eine zweite Datenbank (19) von Videonachrichtendateien, von denen jede in dem Videoinhalt eine jeweilige Nachricht oder einen jeweiligen Gruß enthält; ein Auswahlsystem (15), das es einem Benutzer ermöglicht, von einem Fernendgerät eine erste Videodatei aus der ersten Datenbank und eine zweite Videodatei aus der zweiten Datenbank auszuwählen; und ein Videoverarbeitungsmittel (21), das eingerichtet ist, um die ausgewählte erste und zweite Videodatei zusammenzufügen, um eine einzelne Videodatei zu erzeugen, die den verknüpften Videoinhalt umfasst; **dadurch gekennzeichnet, dass** das Auswahlsystem ferner Mittel zum Identifizieren eines beabsichtigten Empfängers umfasst und das System ferner ein Zustellsystem (33) zum Senden einer Nachricht an den identifizierten Empfänger umfasst, wobei die Nachricht ein Mittel zum Zugreifen auf den verknüpften Videoinhalt in Form eines Links beinhaltet, wobei das Videoverarbeitungsmittel eingerichtet ist, um die einzelne Videodatei in einem von einer Vielzahl von verfügbaren Videoformaten zu erzeugen, wobei das Format gemäß der (bzw. den) Videoabspielmöglichkeit(en) der Vorrichtung des Empfängers ausgewählt wird, welche unter Verwendung von Informationen, die von der Empfängervorrichtung als Reaktion auf die Aktivierung des Links empfangen werden, identifiziert wird oder werden, wobei die einzelne Videodatei als Reaktion auf eine Aktivierung des Links auf der Vorrichtung des Empfängers erzeugt wird.

2. System nach Anspruch 1, wobei das Zustellsystem eingerichtet ist, um den Link unter Verwendung eines Kommunikationsnetzes in einer E-Mail, SMS oder WAP-Pushnachricht an den beabsichtigten Empfänger zu senden, wobei eine Aktivierung des Links es dem Empfänger ermöglicht, über das Kommunikationsnetz eine gestreamte Version des verknüpften Videoinhalts aus dem Nachrichtensystem zu empfangen.

3. System nach Anspruch 1 oder Anspruch 2, wobei die Videoabspielmöglichkeit(en) der Vorrichtung des Empfängers dadurch identifiziert wird oder werden, dass Mittel des Systems eingerichtet werden, um als Reaktion auf eine Aktivierung des Links Header-Informationen zu empfangen, die die Empfängervorrichtung und einen Browser der Vorrichtung identifizieren, und eine Datenbank abzufragen, die ein Format anzeigt, das für die Vorrichtung und den Browser geeignet ist.

4. System nach einem der Ansprüche 1 bis 3, das ferner ein Zeitfestlegungssystem umfasst, das eingerichtet ist, um den Benutzer dazu aufzufordern, eine Zeit und/oder ein Datum einzugeben, wann die Nachricht dem Empfänger zugestellt werden soll.

5. System nach Anspruch 4, wobei das Zeitfestlegungssystem ferner dazu eingerichtet ist, die lokale Zeitzone des Benutzers zu identifizieren und, für den Fall, dass sich die lokale Zeitzone von der lokalen Zeitzone des Linkzustellsystems unterscheidet, die geeignete unterschiedliche Zustellzeit und/oder das geeignete unterschiedliche Zustelldatum zum Senden des Links bezüglich der lokalen Zeitzone zu berechnen.

6. System nach einem der Ansprüche 1 bis 5, wobei das Videoverarbeitungssystem den Videoinhalt in der zweiten Datei automatisch mit dem Ende des Videoinhalts in der ersten Videodatei zusammenfügt, um den verknüpften Videoinhalt herzustellen.

7. System nach Anspruch 6, wobei das Zusammenfügen das Platzieren eines Übergangseffekts zwischen dem Videoinhalt aus der ersten und der zweiten Videodatei beinhaltet.

8. System nach Anspruch 4 und jedem davon abhängigen Anspruch, wobei, wenn das Linkzustellsystem identifiziert, dass ein Link gemäß einer bestimmten Zeitfestlegung gesendet werden soll, das Videoverarbeitungsmittel automatisch eingerichtet wird, um den verknüpften Videoinhalt zum Speichern und Verknüpfen in der Nachricht, die nachfolgend dem beabsichtigten Empfänger zugestellt wird, zu erzeugen.

9. System nach Anspruch 4 und jedem davon abhängigen Anspruch, wobei, wenn das Linkzustellsystem identifiziert, dass ein Link gemäß einer bestimmten Zeitfestlegung gesendet werden soll, das Videoverarbeitungsmittel automatisch eingerichtet wird, um den verknüpften Video inhalt erst zu erzeugen, nachdem der Link aus der Ferne aktiviert wurde, wonach das Videoverarbeitungsmittel automatisch eingerichtet wird, um das verknüpfte Video zur Übertragung an die Empfängervorrichtung zu erzeugen.

10. Verfahren zum Erzeugen einer personalisierten Videonachricht, wobei das Verfahren das Auffordern zur Auswahl einer ersten, personalisierten Videodatei aus einer ersten Datenbank von personalisierten Dateien, von denen sich jede in dem Videoinhalt auf einen jeweiligen Namen oder eine jeweilige natürliche oder juristische Person (3.2) bezieht, das Auffordern zur Auswahl einer zweiten Videodatei mit einer Nachricht aus einer zweiten Datenbank von Dateien, von denen jede in dem Videoinhalt eine jeweilige Nachricht oder einen jeweiligen Gruß (3.11) enthält, und das Empfangen einer Identifizierung eines beabsichtigten Empfängers (3.18) umfasst, **dadurch gekennzeichnet, dass** das Verfahren ferner das Senden einer Nachricht (13.5) an den Empfänger, wobei die Nachricht einen Link zum Zugreifen auf verknüpften Videoinhalt beinhaltet, und als Reaktion auf die Aktivierung des Links (13.1) durch den Empfänger, das Empfangen von Informationen, die eine Identifizierung der Art (13.2) der Empfängervorrichtung ermöglicht, das Bestimmen der Videoabspielmöglichkeit(en) der Empfängervorrichtung aus den Identifizierungsinformationen und das Verarbeiten der ausgewählten ersten und zweiten Videodatei umfasst, um eine einzelne Videodatei zu erzeugen, die den verknüpften Videoinhalt umfasst, wobei die erzeugte Videodatei unter Verwendung eines Codec erzeugt wird, der für die Videoabspielmöglichkeit(en) der Art (13.6) der Vorrichtung des Empfängers geeignet ist.

11. Verfahren nach Anspruch 10, das ferner das Zustellen des Links an eine Vorrichtung, die dem beabsichtigten Empfänger zugeordnet ist, in einer E-Mail, SMS oder einer WAP-Pushnachricht über ein Daten- oder Kommunikationsnetz umfasst, wobei die Aktivierung des Links die Zustellung einer gestreamten Version des verknüpften Videoinhaltes an die Empfängervorrichtung veranlasst.

12. Verfahren nach Anspruch 10 oder Anspruch 11, wobei die Videoabspielmöglichkeit(en) der Art der Empfängervorrichtung mittels Empfangen von Header-Informationen, die die Art der Empfängervorrichtung und einen Browser der Vorrichtung identifizieren, als Reaktion auf die Aktivierung des Links und das Abfragen einer Datenbank bestimmt wird oder werden, die ein Format anzeigt, das für die Vorrichtung und den Browser geeignet ist.

13. Nichtflüchtiges computerlesbares Speichermedium, auf dem ein computerlesbarer Code gespeichert ist, der bei Ausführung durch eine Recheneinrichtung die Recheneinrichtung dazu veranlasst, ein Verfahren nach einem der Ansprüche 10 bis 12 durchzuführen.

## Revendications

1. Système de messagerie vidéo personnalisé (5), le système comprenant une première base de données (17) de fichiers vidéo personnalisés, chacun desquels se rapportant, dans le contenu vidéo, à une entité ou un nom respectif; une deuxième base de données (19) de fichiers de messages vidéo, chacun desquels contenant, dans le contenu vidéo, un message ou une formule d'accueil correspondant(e) ; un système de sélection (15) permettant à un utilisateur de sélectionner, d'un terminal distant, un premier fichier vidéo dans la première base de données, et un deuxième fichier vidéo dans la deuxième base de données ; et un dispositif de traitement vidéo (21) agencé pour joindre les premier et deuxième fichiers vidéo sélectionnés afin de générer un fichier vidéo unique comprenant le contenu vidéo enchaîné ; **caractérisé en ce que** le système de sélection comprend en outre un dispositif d'identification d'un destinataire visé, et le système comprend en outre un système de diffusion (33) pour transmettre un message au destinataire identifié, ledit message comprenant un dispositif d'accès au contenu vidéo enchaîné sous forme d'un lien, le dispositif de traitement vidéo étant agencé pour générer le fichier vidéo unique dans un de la pluralité des formats vidéo disponibles, le format étant sélectionné en accord avec les capacités de lecture vidéo du dispositif du destinataire, qui est ou sont déterminées en utilisant des informations reçues dudit dispositif destinataire en réponse à une activation du lien, le fichier vidéo unique étant généré en réponse à une activation du lien au dispositif destinataire.

2. Système selon la revendication 1, le système de diffusion étant agencé pour transmettre le lien au destinataire visé en utilisant un réseau de communications dans un e-mail, un SMS ou un message de pousser WAP, l'activation du lien permettant audit destinataire de recevoir, du système de messagerie, par le réseau de communications, une version transmise en continu du contenu vidéo enchaîné.

3. Système selon la revendication 1 ou la revendication 2, les capacités de lecture vidéo du dispositif du destinataire étant déterminées à l'aide du système agencé pour recevoir, en réponse à l'activation du lien, des informations d'en-tête identifiant le dispositif du destinataire et un navigateur du dispositif, et interrogeant une base de données indiquant un format approprié pour ledit dispositif et le navigateur.

4. Système selon une quelconque des revendications 1 à 3, comprenant en outre un système de spécification des données de temps agencé pour inviter l'utilisateur à entrer une heure et/ou date à laquelle/auxquelles le message doit être transmis au destinataire.

5. Système selon la revendication 4, le système de spécification des données de temps étant agencé en outre pour identifier le fuseau horaire local de l'utilisateur et, dans l'éventualité où ledit fuseau horaire local soit différent du fuseau horaire local du système de distribution du lien, pour calculer l'heure et/ou la date différente appropriée de transmission du lien relativement au fuseau horaire local.

6. Système selon une quelconque des revendications 1 à 5, le système de traitement vidéo joignant automatiquement le contenu vidéo dans le deuxième fichier à la fin du contenu vidéo dans le premier fichier vidéo, pour produire le contenu vidéo enchaîné.

7. Système selon la revendication 6, la jonction comportant le placement d'un effet de transition entre les contenus vidéo provenant des premier et deuxième fichiers vidéo.

8. Système selon la revendication 4, et toute revendication tributaire de celle-ci, le système de distribution du lien identifiant qu'un lien doit être transmis en accord avec une certaine spécification de données du temps, le dispositif de traitement vidéo étant agencé automatiquement pour générer le contenu vidéo enchaîné à stocker et relier au message transmis par la suite au destinataire visé.

9. Système selon la revendication 4, et toute revendication tributaire de celle-ci, le système de distribution du lien identifiant qu'un lien doit être transmis en accord avec une certaine spécification de données du temps, le dispositif de traitement vidéo étant agencé automatiquement pour ne générer le contenu vidéo enchaîné qu'après la télé-activation du lien, le dispositif de traitement vidéo étant agencé automatiquement après quoi pour générer le contenu vidéo enchaîné à transmettre au dispositif destinataire.

10. Méthode de génération d'un message vidéo personnalisé, la méthode comprenant l'invite à la sélection d'un premier fichier vidéo personnalisé dans une première base de données de fichiers personnalisés, chacun desquels se rapportant, dans le contenu vidéo, à une entité ou un nom correspondant (3.2), l'invite à la sélection d'un deuxième fichier vidéo dans une deuxième base de données, chacun desquels contenant, dans le contenu vidéo, un message ou une formule d'accueil (3.11) correspondant(e), la réception de l'identification d'un destinataire visé (3.18), **caractérisée en ce que** la méthode comprend en outre la transmission au destinataire d'un message (13.5), ledit message comprenant un lien pour accéder au contenu vidéo enchaîné, et, en réponse à l'activation du lien (13.1) par le destinataire, la réception d'informations permettant l'identification du type de dispositif destinataire (13.2), la détermination, d'après les informations d'identification, des capacités de lecture vidéo du dispositif destinataire, et le traitement des premier et deuxième fichiers vidéo sélectionnés afin de générer un fichier vidéo unique comprenant le contenu vidéo enchaîné, ledit fichier vidéo généré étant généré à l'aide d'un codec approprié pour les capacités de lecture vidéo du type de dispositif destinataire (13.6).

11. Méthode selon la revendication 10, comprenant en outre la transmission du lien à un dispositif associé avec le destinataire visé dans un e-mail, un SMS ou un message de pousser WAP dans un réseau de données ou de communications, l'activation du lien entraînant la transmission d'une version en continu du contenu vidéo enchaîné au dispositif destinataire.

12. Méthode selon la revendication 10 ou la revendication 11, les capacités de lecture vidéo du type de dispositif destinataire étant déterminées par le biais de la réception, en réponse à l'activation du lien, des informations d'en-tête identifiant le type de dispositif du destinataire et un navigateur du dispositif, et interrogeant une base de données indiquant un format approprié pour lesdits dispositif et navigateur.

13. Support de stockage, non transitoire, lisible par ordinateur, sur lequel est stocké un code lisible par ordinateur, qui, lors de son exécution par un appareil informatique, entraîne l'exécution, par l'appareil informatique, d'une méthode selon une quelconque des revendications 10 à 12.
